# EUROPÄISCHE PATENTSCHRIFT

(11) **EP 1 603 216 B1**
(45) Veröffentlichungstag und Bekanntmachung des Hinweises auf die Patenterteilung: **09.11.2011**
(21) Anmeldenummer: 04405325.4
(22) Anmeldetag: 26.05.2004
(51) Int. Cl.: H02K 37/12, H01R 31/08, H02K 3/52, H02P 8/16

(54) **Bürstenloser Elektromotor und Verfahren zur Herstellung desselben**
Brushless electric motor and method for its manufacturing
Moteur électrique sans balais et méthode pour sa fabrication

(43) Veröffentlichungstag der Anmeldung: 07.12.2005
(73) Patentinhaber: Johnson Electric Switzerland AG, 3280 Murten (CH)
(72) Erfinder: Bourqui, Yvan, 1720 Corminboeuf (CH)
(74) Vertreter: Störzbach, Michael Andreas

(56) Entgegenhaltungen:
- DE-A- 1 613 417
- DE-A- 10 213 743
- DE-A- 19 639 723

## Beschreibung

Die vorliegende Erfindung bezieht sich auf einen bürstenlosen Elektromotor gemäss Oberbegriff des Patentanspruchs 1 sowie auf ein Verfahren zur Herstellung eines derartigen Elektromotors.

Zum Antreiben des Rotors wird bei bürstenlosen Elektromotoren anstelle von Bürsten bzw. Kommutatoren eine elektronische Steuerschaltung verwendet, um die Spulen zeitlich koordiniert zu bestromen.

Die elektronische Steuerschaltung ist besonders einfach bei Elektromotoren, die unipolar sind. Die Spulen sind bei dieser Art von Elektromotoren in der Mitte elektrisch kurzgeschlossen, wie im Dokument DE 1613417 gezeigt, sodass die Anzahl der zur Steuerschaltung führenden Verbindungsdrähte von sechs auf fünf reduzierbar ist. Für diese Kurzschlussverbindung werden bekanntermassen Kurschlusskontakte verwendet (cf. z.B. die deutsche Patentschrift DE-A1-196 39 723). Nachteilig ist, dass bei der Herstellung des Elektromotors ein zusätzliches speziell angefertigtes Teil benötigt wird und somit zusätzliche Kosten entstehen.

Ausgehend von diesem Stand der Technik ist es eine Aufgabe der vorliegenden Erfindung, einen Elektromotor der eingangs erwähnten Art anzugeben, der einfacher und kostengünstiger in der Herstellung ist.

Ein Elektromotor, der diese Aufgabe löst, ist im Anspruch 1 angegeben. Die weiteren Vorrichtungs-Ansprüche geben bevorzugte Ausführungen an. Ein Verfahren zur Herstellung des Elektromotors findet sich im Verfahrens-Anspruch 7, während die davon abhängigen Verfahrens-Ansprüche weitere Details erläutern.

Die Erfindung wird im Folgenden anhand von bevorzugten Ausführungsbeispielen unter Bezugnahme auf Figuren erläutert. Es zeigen
Fig. 1 ein vereinfachtes Schaltungsbild eines unipolaren Elektromotors;
Fig. 2 ein vereinfachtes Schaltungsbild des erfindungsgemässen Elektromotors;
Fig. 3 eine Draufsicht eines ersten Ausführungsbeispiels des erfindungsgemässen Elektromotors;
Fig. 4 eine perspektivische Ansicht des Elektromotors gemäss Fig. 3;
Fig. 5 eine Detailansicht aus Fig. 4;
Fig. 6 die Detailansicht aus Fig. 5 aus einer leicht nach rechts unten gedrehten Perspektive;
Fig. 7 eine Explosionsanischt eines zweiten Ausführungsbeispiels des erfindungsgemässen Elektromotors;
Fig. 8 den Elektromotor gemäss Fig. 7 nach dem Zusammenbau;
Fig. 9 einen mit Spulen versehenen Spulenkörper für den Elektromotor gemäss Fig. 7;
Fig. 10 den Spulenkörper gemäss Fig. 9 von vorne;
Fig. 11 den Spulenkörper gemäss Fig. 9 von oben; und
Fig. 12 eine teilweise geschnittene Detailansicht aus Fig. 11.

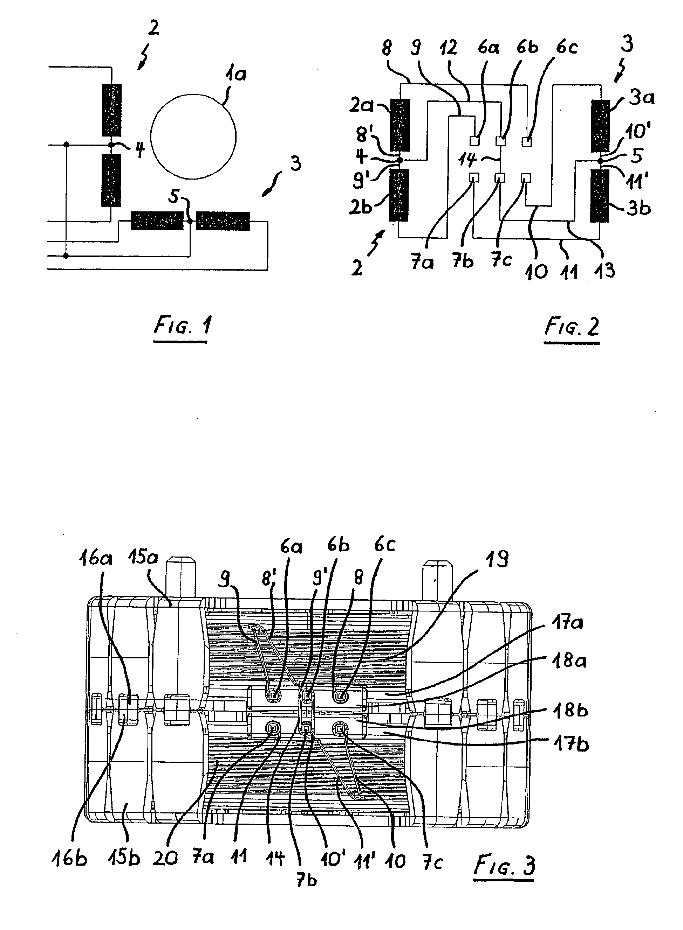

Fig. 1 zeigt ein vereinfachtes Schaltungsbild eines Elektromotors ohne Bürsten. Dieser umfasst einen Permanentmagneten als Rotor 1 und zwei Spulen 2, 3. Der Elektromotor ist unipolar, d.h. während des Betriebes fliesst der Strom in den Spulen 2 und 3 nur jeweils in eine Richtung. Die Spulenmitten 4 und 5 sind elektrisch miteinander verbunden. Bekanntermassen wird zur Herstellung dieser Verbindung ein zusätzliches speziell angefertigtes Teil - Kurzschlusskontakt oder Kurzschlussbrücke genannt - verwendet, welches nach dem Aufwickeln und Verdrahten der Spulen 2, 3 an dem Elektromotor angebracht wird.

Fig. 2 zeigt ein vereinfachtes Schaltungsbild eines erfindungsgemässen Elektromotors. Der Elektromotor umfasst eine erste und zweite Spule 2 bzw. 3 sowie erste Kontaktelemente 6a, 6b, 6c und zweite Kontaktelemente 7a, 7b, 7c. Gemäss dem Ausführungsbeispiel von Fig. 2 bilden die Kontaktelemente 6a, 6b, 6c und 7a, 7b, 7c eine erste bzw. zweite Reihe von je drei Kontaktelementen. Die Enden 8 und 9 des Spulendrahtes der ersten Spule 2 sind jeweils mit einem Kontaktelement 6c bzw. 6a der ersten Reihe elektrisch verbunden. Entsprechend sind die Enden 10 und 11 des Spulendrahtes der zweiten Spule 3 jeweils mit einem Kontaktelement 7c bzw. 7a der zweiten Reihe elektrisch verbunden.

Die erste Spule 2 ist im Wesentlichen in ihrer Mitte 4, welche vorzugsweise der Mittelanzapfung entspricht, mit dem Kontaktelement 6b der ersten Reihe elektrisch verbunden, sodass sich zwei Spulenhälften 2a und 2b von etwa gleicher Anzahl Windungen ergeben. Entsprechend ist die zweite Spule 3 im Wesentlichen in ihrer Mitte 5, welche vorzugsweise der Mittelanzapfung entspricht, mit dem Kontaktelement 7b der zweiten Reihe elektrisch verbunden, sodass sich zwei Spulenhälften 3a und 3b von etwa gleicher Anzahl Windungen ergeben. Die elektrische Verbindung 12 zwischen Mitte 4 und Kontaktelement 6b kann, wie untenstehend erklärt, so gestaltet sein, dass das Ende 8' des Spulendrahtes der ersten Spulenhälfte 2a und der Anfang 9' des Spulendrahtes der zweiten Spulenhälfte 2b mit dem Kontaktelement 6b verbunden sind. Entsprechend kann die elektrische Verbindung 13 zwischen Mitte 5 und Kontaktelement 7b derart gewählt sein, dass das Ende 10' des Spulendrahtes der ersten Spulenhälfte 3a und der Anfang 11' des Spulendrahtes der zweiten Spulenhälfte 3b mit dem Kontaktelement 7b verbunden sind.

Zur Bildung einer Kurzschlussverbindung 14 zwischen den beiden Kontaktelementen 6b und 6c ist der Spulendraht der ersten Spule 2 von der Mitte 4 über das Kontaktelement 6b bis zum Kontaktelement 7b geführt und dort elektrisch verbunden ist. Alternativ oder ergänzend ist es natürlich auch möglich, der Spulendraht der zweiten Spule 3 über das Kontaktelement 7b weiter bis zum Kontaktelement 6b zu führen und dort elektrisch zu verbinden. Eine weitere Möglichkeit ist es, die Kurzschlussverbindung 14 durch ein zusätzliches Stück Spulendraht zu bilden, welches mit den Kontaktelementen 6b und 6c elektrisch verbunden ist.

Die Kurzschlussverbindung 14 ist vorteilhafterweise beim Wickeln der Spulen 2, 3 herstellbar. Die Verwendung des Spulendrahtes als Kurzschlussverbindung 14 hat den Vorteil, dass das Anbringen eines zusätzlichen speziell angefertigten Teils entfällt und somit der Elektromotor einfacher und kostengünstiger herstellbar ist.

Die Kontaktelemente 6a, 6b, 6c und 7a, 7b, 7c sind über ein Verbindungskabel (nicht dargestellt) mit einer elektronischen Schaltung (ebenfalls nicht dargestellt) elektrisch verbindbar, wobei aufgrund der Kurzschlussverbindung 14 eine fünfadrige anstelle einer sechsadrigen Leitung ausreichend ist.

Die Spulen 2, 3 bzw. Spulenhälften 2a, 2b, 3a, 3b werden jeweils nur in einer Richtung bestromt, sodass die elektronische Schaltung besonders einfach ausgestaltet werden kann in Form eines unipolaren Treibers.

### 1. Ausführungsbeispiel

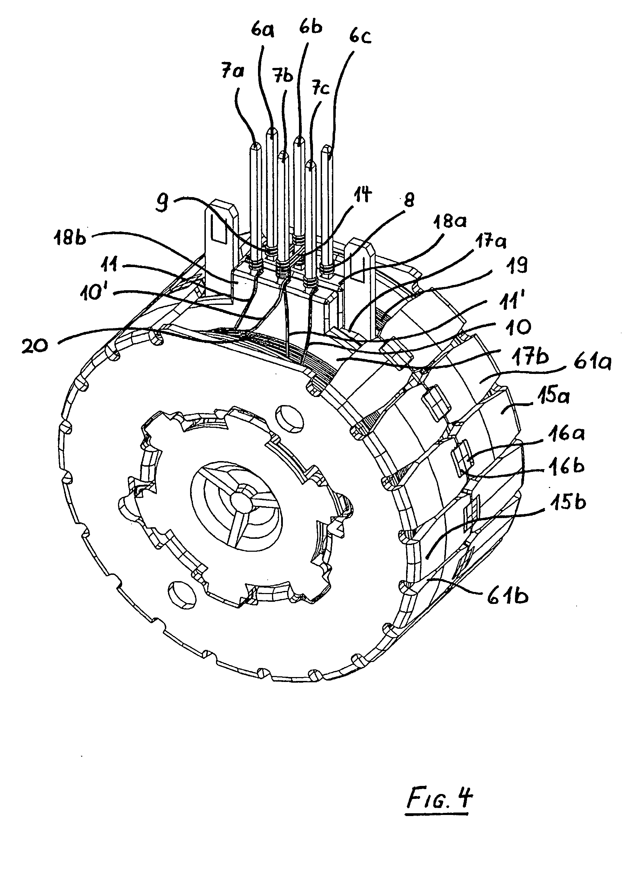

Fig. 3-6 zeigen ein erstes Ausführungsbeispiels des erfindungsgemässen Elektromotors. Der Elektromotor umfasst einen permanentmagnetischen Rotor (in den Figuren nicht sichtbar), einen Stator mit zwei äusseren Statorplatten 15a, 15b und zwei inneren Statorplatten 16a, 16b, einen ersten Spulenkörper 17a mit einer ersten Spule 19, die ringförmig um die Rotationsachse des Rotors gewickelt ist, und einen zweiten Spulenkörper 17b, der neben dem ersten Spulenkörper 17a angeordnet und mit einer zweiten Spule 20 versehen ist, die ebenfalls ringförmig um die Rotationsachse des Rotors gewickelt ist.

Die äussere Statorplatte 15a bzw. 15b ist jeweils seitlich mit einer Öffnung versehen, durch welche ein Fortsatz 18a des ersten Spulenkörpers 17a bzw. ein Fortsatz 18b des zweiten Spulenkörpers 17b aus dem Stator nach aussen ragt. Der Fortsatz 18a bzw. 18b ist mit drei nach aussen weisenden Stiften 6a, 6b, 6c bzw. 7a, 7b, 7c versehen, die den in Fig. 2 gezeigten Kontaktelementen entsprechen. Vorteilhafterweise sind die beiden Fortsätze 18a und 18b nebeneinander angeordnet, sodass insbesondere der Abstand zwischen den beiden Stiften 6b und 7b klein ist und mit dem Spulendraht kurzgeschlossen werden können. Die Stifte 6a, 6b, 6c, 7a, 7b, 7c sind so angeordnet und ausgebildet, dass sie als direkten Anschluss für ein Kabel dienen, d.h. ein mit einem geeigneten Steckanschluss versehenes Kabel kann ohne zusätzliches Verbindungsteils auf die Stifte 6a, 6b, 6c, 7a gesteckt werden kann. Der Elektromotor ist so auf einfache Weise zur Energieversorgung und zur Steuerung über das Kabel mit der elektronischen Steuerschaltung verbindbar.

Lediglich die äusseren Statorplatten 15a, 15b weisen an ihrer Peripherie abgewinkelte Rückschlussarme 61a, 61b auf, während die inneren Statorplatten 16a, 16b im Wesentlichen eben sind. Diese Ausgestaltung macht die Spulenkörper 17a, 17 für ein Wickeln der Spulen 19, 20 mittels Wickelautomaten zugänglich. Dazu werden zuerst die inneren Statoren 15a, 15b und die Spulenkörper 17a, 17b mit den Stiften 6a, 6b, 6c, 7a, 7b, 7c zu einem Paket zusammengefügt und anschliessend mit den beiden Spulen 19, 20 zusammen mit der Kurzschlussverbindung 14 versehen. Nachdem der Wickelprozess abgeschlossen ist, wird schliesslich die äussere Statorplatte 15a bzw. 15b auf die entsprechende innere Statorplatte 16a bzw. 16b gedrückt.

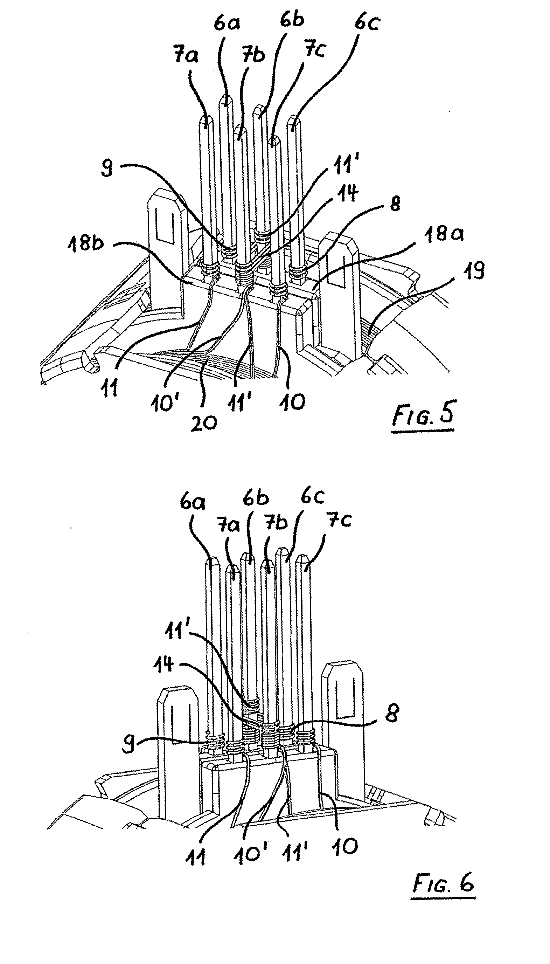

Zur Bildung des Schaltungsschemas gemäss Fig. 2 wird vorteilhafterweise ein bifilarer Spulendrahtleiter verwendet, der z.B. wie folgt auf die Spulenkörper 17a, 17b aufgewickelt wird:
- Zur Bildung der ersten Spule 2 bzw. 19 wird der Anfang 8 der ersten Ader des Spulendrahtleiters am Stift 6c befestigt und der Anfang 9' der zweiten Ader am Stift 6b.
- Der Spulendrahtleiter wird entsprechend der gewünschten Windungszahl der Spulenhälfte 2a bzw. 2b um den ersten Spulenkörper 17a gewickelt und das Ende 8' der ersten Ader am Stift 6b sowie das Ende 9 der zweiten Ader am Stift 6a befestigt.
- Entsprechend wird zur Bildung der zweiten Spule 3 bzw. 20 der Anfang 11 der ersten Ader des Spulendrahtleiters am Stift 7a befestigt und der Anfang 10' der zweiten Ader am Stift 7b befestigt und dann der Spulendrahtleiter entsprechend der gewünschten Windungszahl der Spulenhälfte 3a bzw. 3b um den zweiten Spulenkörper 17b gewickelt.
- Das Ende 10 der zweiten Ader wird am Stift 7c befestigt, während das Ende 11' der ersten Ader zuerst um den Stift 7b gewickelt und dann zur Bildung des Kurzschlusses 14 um den Stift 6b gewickelt wird. Wie insbesondere aus den Fig. 5 und 6 ersichtlich, kann das Spulendrahtende mehrmals um die Stifte 7b und 6b geführt werden, um eine sichere elektrische Verbindung 14 zu gewährleisten.

Wie oben erwähnt, ist es zur Bildung der Kurzschlussverbindung 14 auch möglich, ein separates Stück Spulendraht zu verwenden, welches um die beiden Stifte 6b und 7b gewickelt wird.

Durch das bifilare Wickeln der Spulen 19, 20 ist gewährleistet, dass die beiden Spulenhälften 2a und 2b bzw. 3a und 3b gleichmässig auf dem Spulenkörper 17a bzw. 17b verteilt sind und somit das vom Elektromotor erzeugte Drehmoment im Wesentlichen unabhängig von der Drehrichtung des Rotors ist.

Als Spulendraht eignet sich ein elektrischer Leiter mit einer äusseren Isolationsschicht, beispielsweise ein Kupferdraht, der lackiert ist. Die Stifte 6a, 6b, 6c, 7a, 7b, 7c sind aus einem elektrisch leitenden Metall. Durch Löten oder lokale Hitzeeinwirkung, beispielsweise mittels Lichtbogenschweissen, wird eine unlösbare galvanische Verbindung zwischen den Spulendrahtenden 8, 8' und 9', 9, 10, 10' und 11', 11 und des jeweiligen Stiftes 6c, 6b, 6a, 7c, 7b, 7a hergestellt.

### 2. Ausführungsbeispiel

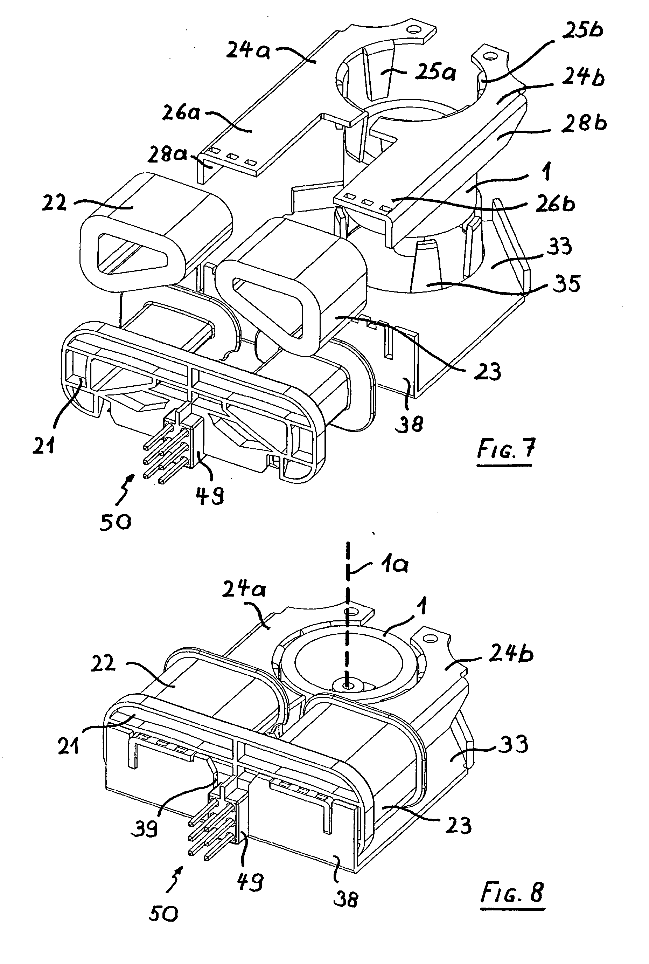

Wie die Fig. 7 und 8 zeigen, umfasst der Elektromotor einen Rotor 1, einen Spulenkörper 21 mit Spulen 22 und 23 sowie einen Stator mit einer ersten, zweiten und dritten Statorplatte 24a, 24b, 33. Der Elektromotor weist einen besonders flachen und kompakten Aufbau auf.

Der Rotor 1 ist permanentmagnetisch und mit einer bestimmten Anzahl Pole, d.h. Nord- und Südpole, versehen.

Die erste und die zweite Statorplatte 24a, 24b sind jeweils einstückig und spiegelsymmetrisch zueinander ausgebildet. Sie weisen jeweils im Bereich des Rotors 1 Zähne 25a bzw. 25b auf, welche in Richtung der dritten Statorplatte 33 abgewinkelt sind. Angrenzend an die Zähne 25a, 25b umfasst die erste bzw. zweite Statorplatte 24a, 24b einen Spulenarm 26a bzw. 26b, der im Wesentlichen quer zur Rotationsachse 1a verläuft, vorzugsweise im Wesentlichen senkrecht zur Rotationsachse 1a.

Der Spulenarm 26a bzw. 26b weist entlang seiner Längsseite einen abgewinkelten Teil 28a bzw. 28b auf, wodurch sich ein im Wesentlichen L-förmiger Querschnitt ergibt. Dadurch ist gewährleistet, dass der Spulenarm 26a bzw. 26b mit einer vergrösserten Fläche dem von der bestromten Spule 22 bzw. 23 erzeugten magnetischen Feld ausgesetzt ist und so dem Auftreten einer Sättigung entgegengewirkt wird.

Die dritte Statorplatte 33 ist einstückig ausgebildet und weist im Bereich des Rotors 1 eine kreisförmige Ausnehmung auf, an deren Rand Zähne 35 angeordnet sind, die in Richtung der ersten bzw. zweiten Statorplatte 24a, 24b abgewinkelt sind. Das eine Ende 38 der dritten Statorplatte 33 ist ebenfalls abgewinkelt, wobei es in der Mitte eine Ausnehmung 39 umfasst.

Beim zusammengesetzten Elektromotor durchdringen sich die Zähne 25a, 25b, 35 gegenseitig und bilden einen Käfig, in welchem der Rotor 1 untergebracht ist. Beim Bestromen der Spule 22, 23 werden die entsprechenden Statorplatte 24a, 24b und somit die Zähne 25a, 25b magnetisiert, wobei über die dritte Statorplatte 33 die magnetischen Flusslinien geschlossen werden.

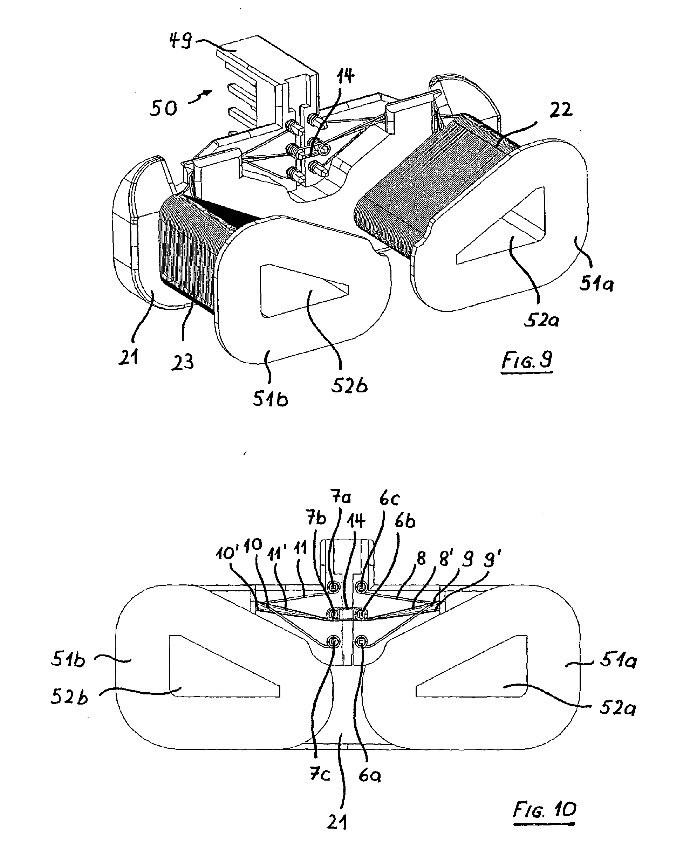

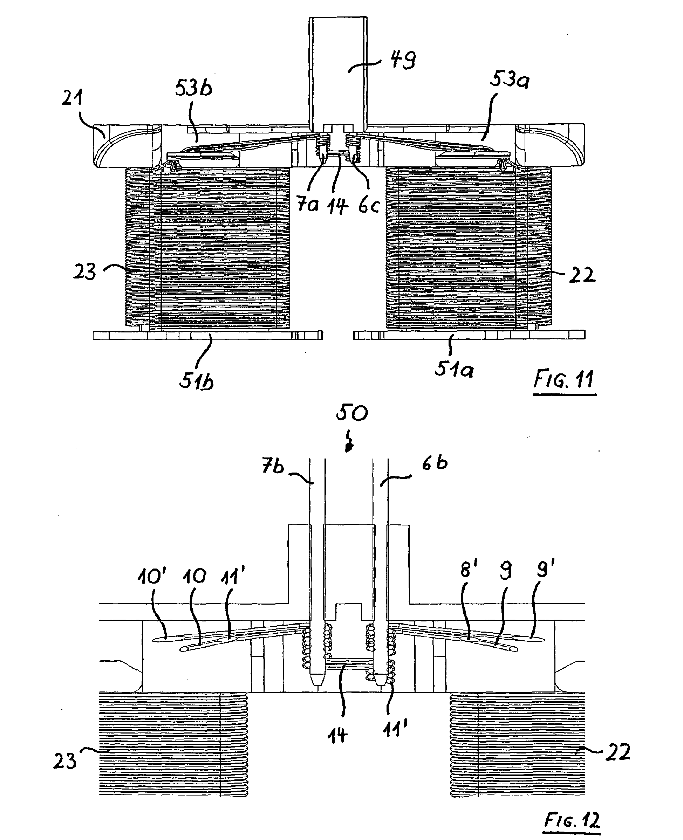

Wie auch aus den Fig. 9 bis 11 ersichtlich, ist der Spulenkörper 21 einteilig ausgebildet und weist in der Mitte ein Anschlussstück 49 mit metallenen Stiften 50 auf, welche den Kontaktelementen 6a, 6b, 6c, 7a, 7b, 7c entsprechen. Wie insbesondere Fig. 12 zeigt, sind die Stifte 50 durch das Anschlussstück 49 hindurchgeführt, sodass sie vorderseitig mit dem Spulendraht der Spulen 22, 23 und rückseitig mit einem Kabel, welches einen geeigneten Steckanschluss aufweist, verbindbar sind.

Beidseitig vom Anschlussstück 49 umfasst der Spulenkörper 21 einen ersten bzw. zweiten Spulenträger 51a bzw. 51b zur Aufnahme der Spule 22 bzw. 23. Der Spulenträger 51a bzw. 51b ist in der Mitte mit einer in Längsrichtung durchgehenden Öffnung 52a bzw. 52b versehen, welche einen im Wesentlichen dreieckigen Querschnitt hat. Der Spulenkörper 21 ist zwischen dem Anschlussstück 49 und dem Spulenträger 51a bzw. 51b mit kanalförmigen Abschnitten 53a bzw. 53b versehen, in welchen die Spulendrähte der Spulen 22, 23 seitlich zu den Stiften 50 geführt und so u.a. vor Beschädigungen geschützt sind.

Zur Herstellung des Spulenkörpers 21 wird Kunststoff beispielsweise durch Spritzgiessen in die gewünschte Form gebracht, wobei das Anschlussstück 49 mit Löchern versehen ist. Der Durchmesser der Löcher ist jeweils etwas kleiner als der Durchmesser der Stifte 50 gewählt, sodass diese durch Presspassung im Anschlussstück 49 festgehalten sind. Die Stifte 50 haben einen im Wesentlichen quaderförmigen Grundkörper mit spitzen Enden. Diese erlauben es, die Stifte 50 leichter in die entsprechenden Löcher hineinzutreiben.

Die Bewicklung des Spulenkörpers geschieht ähnlich wie beim ersten Ausführungsbeispiel:
- Der bifilare Drahtleiter wird mit seinen Enden 8 und 9' an dem Stift 6c bzw. 6b befestigt, um den Spulenträger 51a gewickelt, und dann die anderen Enden 8' und 9 des Drahtleiters an dem Stift 6b bzw. 6a befestigt.
- Dann wird der bifilare Drahtleiter mit seinen Enden 10' und 11 an dem Stift 7b bzw. 7a befestigt und um den Spulenträger 51b gewickelt. Das eine Ende 10 des Drahtleiters wird am Stift 7c befestigt, während das andere Ende 11' um den Stift 7b gewickelt und dann zur Bildung des Kurzschlusses 14 um den Stift 6b gewickelt wird. Wie insbesondere Fig. 12 zeigt, kann das Ende 11' mehrmals um die beiden Stifte 7b und 6b geführt werden.
- Durch Löten und/oder lokale Hitzeeinwirkung, beispielsweise mittels Lichtbogenschweissen, wird eine unlösbare galvanische Verbindung zwischen den Spulendrahtenden und den Stiften 50 hergestellt.

Bei Zusammenbau des Elektromotors wird der Spulenarm 26a bzw. 26b durch die entsprechende Öffnung 52a bzw. 52b des Spulenkörpers 21 geführt und das Anschlussstück 49 in die Ausnehmung 39 der dritten Statorplatte 33 geschoben.

Der erfindungsgemässe Elektromotor ist u.a. als Schrittmotor oder als bürstenloser Gleichstrommotor betreibbar. Im letzteren Fall sind Mittel zum Erfassen der Rotorlage, beispielsweise in Form von Sensoren, insbesondere Hall-Sensoren, vorgesehen. Der erfindungsgemässe Elektromotor ist u.a. geeignet als Antrieb in Aktuatoren, wie sie in Kraftfahrzeugen zur Steuerung von beweglichen Komponenten verwendet werden, wozu in der Regel eine Elektromotorenleistung bis 2 W ausreichend ist.

Aus der vorangehenden Beschreibung sind dem Fachmann zahlreiche Abwandlungen zugänglich, ohne den Schutzbereich der Erfindung zu verlassen, der durch die Ansprüche definiert ist.

Die Anzahl der Spule kann an den gewünschten Einsatzbereichs des Elektromotors angepasst werden und z.B. auch mehr als zwei sein. Je nach Schaltungsschema ist der Spulendraht verwendbar, um beim Wickeln der Spulen die nötige(n) Kurzschlussverbindung(en) herzustellen.

## Patentansprüche

1. Unipolarer Elektromotor ohne Bürsten, mit einer ersten Spule, die mit ersten Kontaktelementen elektrisch verbunden ist, und mindestens einer zweiten Spule, die mit zweiten Kontaktelementen elektrisch verbunden ist, **dadurch gekennzeichnet, dass**
die ersten (6a, 6b, 6c) und zweiten Kontaktelemente (7a, 7b, 7c) Stifte sind und dass
zum elektrischen Verbinden der beiden Spulen (2, 3; 19, 20; 22, 23) in der jeweiligen Spulenmitte (4, 5) eine Kurzschlussverbindung (14) zwischen einem (6b) der ersten Kontaktelemente und einem (7b) der zweiten Kontaktelemente durch Spulendraht (11') gebildet ist, aus welchem die erste (2; 19; 22) und/oder zweite Spule (3; 20; 23) gewickelt ist.

2. Elektromotor nach Anspruch 1, **dadurch gekennzeichnet, dass** die Kurzschlussverbindung (14) durch ein Spulendrahtende (11') der ersten (2, 19, 22) und/oder zweiten Spule (3, 20, 23) gebildet ist.

3. Elektromotor nach einem der Ansprüche 1 bis 2, **dadurch gekennzeichnet, dass** die beiden Spulen (2, 3; 19, 20; 22, 23) an der Mittelanzapfung über die beiden kurzgeschlossenen Kontaktelemente (6b, 7b) elektrisch verbunden sind.

4. Elektromotor nach einem der Ansprüche 1 bis 3, **dadurch gekennzeichnet, dass** die Stifte gleichzeitig zum Anschluss der Spulendrähte (8, 8', 9, 9', 10, 10', 11, 11') sowie zum Anschluss eines Verbindungskabels dienen.

5. Elektromotor nach einem der Ansprüche 1 bis 4, **dadurch gekennzeichnet, dass** er einen einteiligen Spulenkörper (21) umfasst, welcher mit den Kontaktelementen (6a, 6b, 6c, 7a, 7b, 7c) versehen ist und auf welchem die beiden Spulen (22, 23) aufgewickelt sind.

6. Elektromotor nach einem der Ansprüche 1 bis 5, **dadurch gekennzeichnet, dass** er ein Schrittmotor oder bürstenloser Gleichstrommotor ist.

7. Verfahren zur Herstellung eines unipolaren Elektromotors ohne Bürsten, mit einer ersten Spule, die mit ersten Kontaktelementen elektrisch verbunden ist, und mindestens einer zweiten Spule, die mit zweiten Kontaktelementen elektrisch verbunden ist, **gekennzeichnet durch** folgende Schritte:
- Ausführen der ersten (6a, 6b, 6c) und der zweiten Kontaktelemente (7a, 7b, 7c) als Stifte und
- Kurzschließen eines Kontaktelementes (6b), welches elektrisch mit der Spulenmitte (4) der ersten Spule (2; 19; 22) verbunden ist, und eines Kontaktelementes (7b), welches elektrisch mit der Spulenmitte (5) der zweiten Spule (3; 20; 23) verbunden ist, mittels eines Spulendrahtes (11'), aus welchem die erste (2; 19; 22) und/oder zweite Spule (3; 20; 23) gewickelt ist.

8. Verfahren nach Anspruch 7, **dadurch gekennzeichnet, dass** mittels eines Spulendrahtendes (11') der ersten (2, 19, 22) und/oder zweiten Spule (3, 20, 23) die Kurzschlussverbindung (14) zwischen dem ersten (6b) und zweiten Kontaktelement (7b) gebildet wird, wobei vorzugsweise die Spulen bifilar gewickelt werden.

9. Verfahren nach einem der Ansprüche 7 bis 8, **dadurch gekennzeichnet, dass** die Spulendrähte (8, 8', 9, 9', 10, 10', 11, 11') durch Löten und/oder Hitzeeinwirkung, insbesondere Lichtbogenschweissen, mit den Kontaktelementen (6a, 6b, 6c, 7a, 7b, 7c) galvanisch verbunden werden.

10. Verfahren nach einem der Ansprüche 7 bis 9, **dadurch gekennzeichnet, dass** die Kontaktelemente (6a, 6b, 6c, 7a, 7b, 7c) in den Spulenkörper (21, 49) getrieben werden, bevor die Spulen (22, 23) gewickelt werden.

## Claims

1. Unipolar brushless electric motor, with a first coil, which is electrically connected to first contact elements, and at least a second coil, which is electrically connected to second contact elements, **characterised in that**
the first (6a, 6b, 6c) and second (7a, 7b, 7c) contact elements are pins and **in that**
for connecting electrically the two coils (2, 3; 19, 29; 22, 23) in the respective centre of the coil a short circuit connection (14) between one of the first contact elements (6b) and one of the second contact elements (7b) is formed by a coil wire (11'), from which the first (2; 19; 22) and/or second coil (3; 20; 23) is wound.

2. Electric motor according to claim 1, **characterised in that** the short circuit connection (14) is formed from a coil wire end (11') of the first (2, 19, 22) and/or second coil (3, 20, 23).

3. Electric motor according to any one of claims 1 to 2, **characterised in that**.the two coils (2, 3; 19, 20; 22, 23) are electrically connected via the two short-circuited contact elements (6b, 7b) to the centre tapping.

4. Electric motor according to any one of claims 1 to 3, **characterised in that** the pins serve at the same time for the connection of the coil wires (8, 8', 9 , 9', 10, 10', 11, 11') and for the connection of a connection cable.

5. Electric motor according to any one of claims 1 to 4, **characterised in that** it comprises a one-piece bobbin (21), which is provided with the contact elements (6a, 6b, 6c, 7a, 7b, 7c) and on which the two coils (22, 23) are wound.

6. Electric motor according to any one of claims 1 to 5, **characterised in that** it is a step motor or brushless DC motor.

7. Method of producing a unipolar brushless electric motor, with a first coil, which is electrically connected to first contact elements, and at least a second coil, which is electrically connected to second contact elements, **characterised by** the following steps:
- realising the first (6a, 6b, 6c) and the second contact elements (7a, 7b, 7c) as pins and
- short-circuiting a contact element (6b) which is electrically connected to the centre (4) of the first coil (2; 9, 22) and a contact element (7b) which is electrically connected to the centre (5) of the second coil (3; 20, 23) by means of a coil wire (11'), from which the first (2; 19; 22) and/or second coil (3; 20; 23) is wound.

8. Method according to claim 7, **characterised in that** the short circuit connection (14) between the first (6b) and second contact element (7b) is formed by means of a coil wire end (11') of the first (2, 19, 22) and/or second coil (3, 20, 23), preferably the coils are bifilar wound.

9. Method according to any one of claims 7 to 8, **characterised in that** the coil wires (8, 8', 9, 9', 10, 10', 11, 11') are galvanically connected to the contact elements (6a, 6b, 6c, 7a, 7b, 7c) by soldering and/or the application of heat, particularly arc welding.

10. Method according to any one of claims 7 to 9, **characterised in that** the contact elements (6a, 6b, 6c, 7a, 7b, 7c) are driven into the bobbin (21, 49) before the coils (22, 23) are wound.

## Revendications

1. Moteur électrique unipolaire sans balais, comprenant une première bobine reliée électriquement à des premiers éléments de contact et au moins une seconde bobine reliée électriquement à des deuxièmes éléments de contact, **caractérisé en ce que**
les premiers (6a, 6b, 6c) et les deuxièmes (7a, 7b, 7c) éléments de contact sont des broches et que,
pour relier électriquement les deux bobines (2, 3; 19, 20; 22, 23) à chaque centre de bobine (4, 5), une liaison de court-circuit (14) est formée entre un (6b) des premiers éléments de contact et un (7b) des deuxièmes éléments de contact par un fil à bobiner (11'), en lequel la première (2; 19; 22) et/ou la deuxième bobine (3; 20; 23 ) est enroulée.

2. Moteur électrique selon la revendication 1, **caractérisé en ce que** la liaison de court-circuit (14) est formée par une extrémité de fil à bobiner (11') de la première (2, 19, 22) et/ou de la deuxième bobine (3, 20, 23).

3. Moteur électrique selon une des revendications 1 à 2, **caractérisé en ce que** les deux bobines (2, 3; 19, 20; 22, 23) sont reliées électriquement à la prise médiane par les deux éléments de contact court-circuités (6b, 7b).

4. Moteur électrique selon une des revendications 1 à 3, **caractérisé en ce que** les broches servent en même temps pour le raccordement des fils à bobiner (8, 8', 9, 9', 10, 10', 11, 11') et pour le raccordement d'un câble de connexion.

5. Moteur électrique selon une des revendications 1 à 4, **caractérisé en ce qu'**il comprend un corps de bobine d'une seule pièce (21), qui comprend les éléments de contact (6a, 6b, 6c, 7a, 7b, 7c) et sur lequel les deux bobines (22, 23) sont enroulées.

6. Moteur électrique selon une des revendications 1 à 5, **caractérisé en ce qu'**il est un moteur pas à pas ou un moteur à courant continu sans balai.

7. Procédé de fabrication d'un moteur électrique sans balais unipolaire, comprenant une première bobine qui est reliée électriquement à des premiers éléments de contact et au moins une seconde bobine qui est reliée électriquement à des deuxièmes éléments de contact, **caractérisé par** les étapes suivantes:
- réaliser les premiers (6a, 6b, 6c) et les deuxièmes éléments de contact (7a, 7b, 7c) en tant que broches et
- court-circuiter un élément de contact (6b) relié électriquement au centre de bobine (4) de la première bobine (2; 19; 22) et un élément de contact (7b) relié électriquement au centre de bobine (5) de la deuxième bobine (3; 20; 23) au moyen d'un fil à bobiner, en lequel la première (2; 19; 22) et/ou la deuxième bobine (3; 20; 23 ) est enroulée.

8. Procédé selon la revendication 7, **caractérisé en ce que** la liaison de court-circuit (14) entre le premier (6b) et le deuxième élément de contact (7b) est formée au moyen d'une extrémité de fil à bobiner (11') de la première (2, 19, 22) et/ou de la deuxième bobine (3, 20, 23), de préférence les bobines sont bifilaires enroulées.

9. Procédé selon une des revendications 7 à 8, **caractérisé en ce que** les fils à bobiner (8, 8', 9, 9', 10, 10', 11, 11') sont reliés galvaniquement aux éléments de contact (6a, 6b, 6c, 7a, 7b, 7c) par soudure et/ou par l'effet de la chaleur, en particulier soudage à l'arc.

10. Procédé selon une des revendications 7 à 9, **caractérisé en ce que** les éléments de contact (6a, 6b, 6c, 7a, 7b, 7c) sont pressés dans le corps de bobine (21, 49) avant que les bobines (22, 23) sont enroulées.
